# EUROPÄISCHE PATENTSCHRIFT

(11) **EP 0 608 731 B1**
(45) Veröffentlichungstag und Bekanntmachung des Hinweises auf die Patenterteilung: **16.04.1997**
(21) Anmeldenummer: 94100544.9
(22) Anmeldetag: 15.01.1994
(51) Int. Cl.: B29C 69/00, B60R 21/20, B44C 5/04

(54) **Fahrzeugausrüstungsteil**
Equipment part for vehicles
Elément d'équipement pour véhicules

(30) Priorität: 29.01.1993 DE 4302471
(43) Veröffentlichungstag der Anmeldung: 03.08.1994
(73) Patentinhaber: BECKER GROUP EUROPE GmbH, 42285 Wuppertal (DE)
(72) Erfinder: Kloke, Jürgen, D-42107 Wuppertal (DE)

(56) Entgegenhaltungen:
- FR-A- 2 443 327
- US-A- 5 252 164
- DATABASE WPI Week 9132, Derwent Publications Ltd., London, GB; AN 91-233184 32! 'antifungal vessel production' & JP-A-3 150 122 (KAMAYA CHEM IND KK) 26. Juni 1991

## Beschreibung

Die Erfindung bezieht sich auf ein Fahrzeugausrüstungsteil, wie Armaturentafel, Armlehne, Haltegriff oder dergleichen, das aus einer rotierten Haut und einer Hinterschäumung oder Ausschäumung aus Kunststoffschaum sowie mit einer darin ggf. eingelagerten Verstärkungseinlage gebildet ist und das zumindest von einer zum Durchführen eines Befestigungselements bestimmten Montageöffnung durchsetzt ist, die durch ein Abdeckelement verschließbar ist.

Bei der Herstellung von Fahrzeugausrüstungsteilen wird oftmals so verfahren, daß zunächst eine Außenhaut im Rotationsverfahren hergestellt und die Haut im Anschluß hieran beschnitten und sodann hinterschäumt oder ausgeschäumt wird. Beim Rotationsverfahren wird Plastisol vorbestimmter Menge in eine Hohlform eingegeben und die Hohlform in Rotation versetzt. Hierdurch bildet sich auf der Hohlformwandung eine recht gleichmäßig dicke Haut aus, die durch Wärmezufuhrung geliert und durch anschließendes Abkühlen verfestigt wird. Dieses bekannte Verfahren hat den Vorteil, daß sich relativ komplizierte Formgebungen verwirklichen lassen und daß die Hautkörperoberfläche sich durch entsprechende Strukturierung der Form mit beliebiger Narbung versehen läßt. Die rotierte Haut wird in eine Schäumform eingelegt, ggf. durch Verstärkungseinlagen ergänzt und hinterschäumt. Um einen solchermaßen gebildeten Formkörper, bei dem es sich um eine Armaturentafel, eine Armlehne, einen Griffkörper oder dergleichen Fahrzeugausrüstungsteil handeln kann, montieren zu können, werden im allgemeinen schon bei der Formkörperherstellung Montageöffnungen zum Durchführen von Befestigungselementen, wie Schrauben, ausgebildet. Bei der Herstellung der Haut lassen sich hierfür entsprechende napfartige Einziehungen problemlos ausbilden.

Die in den Fahrzeugausrüstungsteilen ausgebildeten Montageöffnungen können, sofern sie den Blicken eines Betrachters entzogen sind, offen bleiben. Es läßt sich in der Praxis aber oftmals nicht vermeiden, die Befestigungspositionen in den Sichtbereich eines Betrachters zu legen, was es erforderlich macht, die Montageöffnungen durch Abdeckelemente zu verschließen, weil anderenfalls das angenehme Erscheinungsbild des jeweiligen Ausrüstungsteils nicht mehr gegeben wäre. Bisher hat man sich mit stopfenartigen Abdeckelementen beholfen, die als Kunststoff-Spritzgußteile aus verschiedenen spritzgußfähigen Kunststoffmaterialien hergestellt wurden. Diese bisher praktizierte Lösung führte aber bei der Käuferschaft zu Beanstandungen, denn die spritzgegossenen Abdeckelemente erwiesen sich als nicht farbtreu und zeigten erhebliche Unterschiede in bezug auf Glanzgrad, Härte und Oberflächenstruktur im unmittelbaren Vergleich mit der übrigen Oberflächenausbildung und -gestaltung der Fahrzeugausrüstungsteile.

Der Erfindung liegt daher die Aufgabe zugrunde, ein Fahrzeugausrüstungsteil der eingangs näher erwähnten Art so zu gestalten, daß dasselbe über den gesamten sichtbaren Oberflächenbereich, zu dem auch die Abdeckung der Montageöffnung gehört, wie aus einem Guß erscheint.

Zur Lösung dieser Aufgabe ist erfindungsgemäß vorgesehen, daß das Abdeckelement ein aus einer rotierten Haut gebildeter Formkörper ist, der aus dem Material der rotierten Haut des Ausrüstungsteils besteht und einstückig an der rotierten Haut des Ausrüstungsteils als abtrennbarer Bestandteil angeformt ist.

Die besonderen Vorteile dieser erfindungsgemäßen Maßnahmen liegen klar auf der Hand, denn es versteht sich, daß nunmehr auch die Abdeckelemente nicht nur farbtreu sondern auch mit einem mit der Haut des Ausrüstungsteils übereinstimmenden Glanzgrad, mit gleicher Härte und mit gleicher Oberflächenstruktur, wie Narbung herstellbar sind, wodurch sich für ein Fahrzeugausrüstungsteil ein stilistisch einheitliches Bild ergibt. Zudem werden separate Formen, Arbeitsschritte und Material eingespart, denn die Abdeckelemente fallen einstückig an die Haut des Ausrüstungsteils angeformt an, wenn man die Endkappen der napfartigen Einziehungen, die im Bereich jeder Montageöffnung ausgebildet sind oder Endabschlüsse des Hautkörpers vom Hauptkörper abtrennt und als Abdeckelemente einsetzt. Es ist lediglich erforderlich, die Rotationsform im Bereich dieser Endkappen entsprechend der auch im übrigen gewünschten Oberflächenstruktur des Ausrüstungsteils auszubilden, um eine Schraubabdeckung mit gleicher Narbe, Narbrichtung und Prägnanz zu erhalten.

Ein Ausführungsbeispiel der Erfindung wird im folgenden anhand der Zeichnung näher erläutert. Es zeigen:
- Fig. 1: einen mit einer Montageöffnung ausgebildeten Endbereich eines Fahrzeugausrüstungsteile,
- Fig. 2: eine Ansicht des Fahrzeugausrüstungsteils in Blickrichtung des Pfeils II in Fig. 1,
- Fig. 3: eine Herstellungsstufe des Fahrzeugausrüstungsteils nach Fig. 1 und 2 und
- Fig. 4: ein zum Einsatz in die Montageöffnung des Fahrzeugausrüstungsteils bestimmtes Abdeckelement.

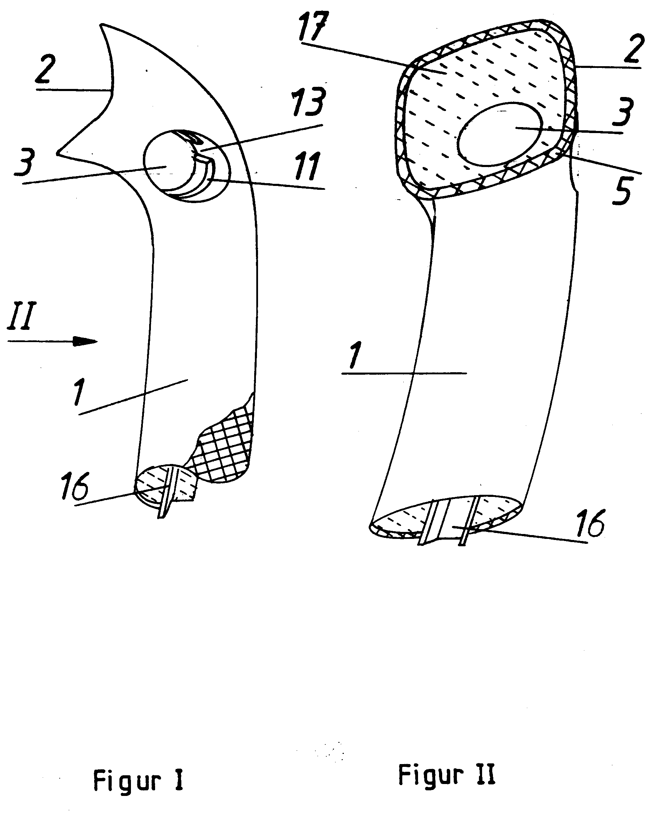

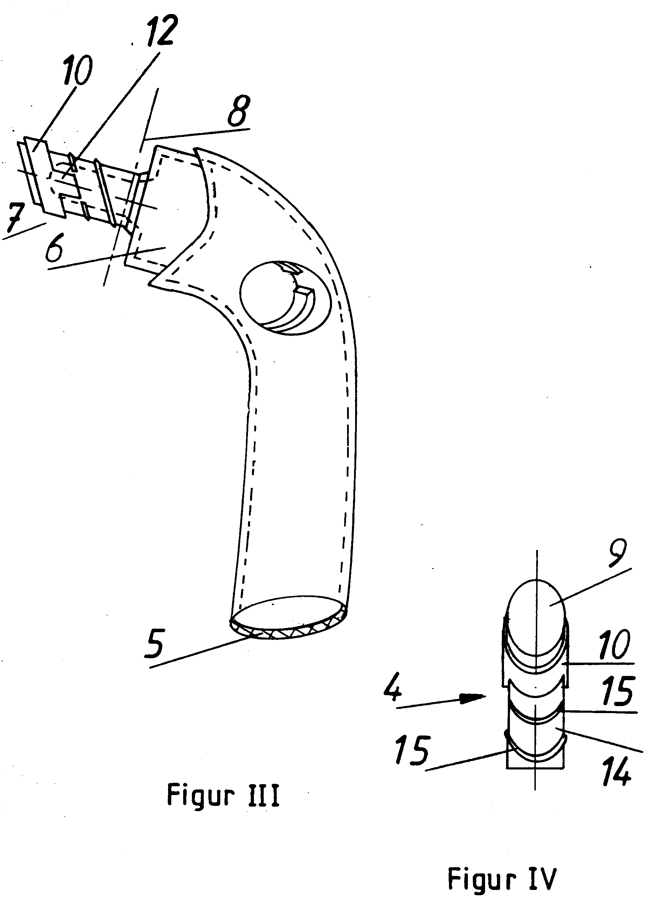

Bei dem in Fig. 1 und 2 gezeigten Fahrzeugausrüstungsteil handelt es sich um den Griffkörper 1 eines Halte- oder Zuziehgriffes, der oftmals an Fahrzeugtüren zur Anordnung gelangt. Solche Griffkörper 1 sind auch häufig Bestandteil einer Griff-Armlehnen-Kombination. Der Griffkörper 1 weist an seinem freien, dargestellten Ende eine dem Tür- oder Türverkleidungsprofil angepaßte Anlagefläche 2 auf, die rinnenförmig gestaltet ist. Der Endbereich des Griffkörpers 1 wird von einer Montageöffnung 3 durchsetzt. Die Montageöffnung 3 erstreckt sich als schräger Durchgangskanal vom Mantel des Griffkörpers 1 bis zur Anlagefläche 2 desselben. Die Montageöffnung 3, die zum Durchführen eines nicht gezeigten Befestigungselements dient, ist durch ein Abdeckelement 4, wie als Ausführungsbeispiel in Fig. 4 gezeigt, verschließbar.

Bei der Herstellung des Fahrzeugausrüstungsteils nach Fig. 1 und 2 wird zunächst der Griffkörper 1 als hohler, lediglich aus einer Haut 5 bestehender Formkörper (Fig. 3) gebildet. Der hohle Formkörper ist mit zumindest einer napfförmigen, die Montageöffnung 3 bildenden Einziehung ausgebildet. Ferner ist der Hohlkörper mit Endanformungen 6 ausgebildet, die später abzutrennen sind. In Fig. 3 ist nun gezeigt, daß die Endanformung 6 durch einen hohlen, zapfenartigen Ansatz 7 verlängert ist, welcher von der Endanformung 6 längs der strichpunktierten Linie 8 abtrennbar ist, um hiernach das in die Montageöffnung 3 passende Abdeckelement 4 zu bilden.

Für die Herstellung der Haut 5 wird eine Galvanoform verwendet, deren Hohlraumwandung geeignet ist, der Haut eine lederartig genarbte Oberfläche zu verleihen. Da die sichtbare Kopffläche 9 des Abdeckelements 4 der Oberfläche der Haut 5 entsprechen soll, ist die Galvanoform im Ausbildungsbereich der Kopffläche 9 entsprechend bearbeitet. Bei der Herstellung der Rotationsform kann wir folgt vorgegangen werden: Zunächst wird ein Modell des Fahrzeugausrüstungsteils minus Folie erstellt. Das Modell wird mit Überzugsmaterial, das aus ABS, PVC oder org. Leder bestehen kann und das vom Kunden gewünschte Narbbild aufweist, überzogen. Das so überzogene Modell wird sodann über Silicon od. dgl. negativ abgeformt. Diese Abformung wird "Urflexinegativ" genannt und in diesem wird ein Positivmodell, das sogenannte "Urbadmodell", erstellt. Von dem Urbadmodell wird, ggf. nach Überarbeitung im Bereich von Folienstoßkanten und etwaigen Fehlern im Narbbereich das sogenannte "Serienflexinegativ" abgeformt, in dem die Badmodelle erstellt werden. Die Badmodelle werden mit Leitsilber versehen, um sie leitfähig zu machen. Im Sulfamat-Nickelbad wird die Galvano-Nickelform erstellt. Das ursprüngliche Narbbild des überzogenen Modells wird somit über die Positiv- und Negativabformung zu 100 % übertragen. Diese Vorgehensweise trifft für die Abdeckungen auch zu. Die ebenfalls auf dem Galvanoweg erstellte Form der Abdeckung, wird als Rotationsformdeckel an der Griffkörperrotationsform angebunden.

Das im Rotationsverfahren hergestellte Abdeckelement 4 besitzt die Form eines hohlen Stopfens. Dabei schließt sich an die Kopffläche 9 ein verdickter Ringwulst 10 an, der sich im montierten Zustand auf einen stufenförmigen Absatz 11, der innerhalb der Montageöffnung 3 ausgebildet ist, abstützt. An den Ringwulst 11 schließen sich axial ausgerichtete Materialansätze 12 diametral gegenüberliegend an, die als Verdrehsicherung in Führungsaufnahmen 13 des Absatzes 11 eingreifen. Als Axialsicherung für das Abdeckelement 4 dienen am Schaft 14 desselben angeformte Ringwülste 15.

In die rotierte Haut 5 wird nach dem Abtrennen der Endanformungen 6 gewünschtenfalls eine Verstärkungseinlage 16 eingefädelt, wonach die Haut 5 in herkömmlicherweise in eine Schäumform eingelegt und in herkömmlicher Weise mit ausschäumbarem Kunststoffmaterial 17 ausgeschäumt wird.

## Patentansprüche

1. Fahrzeugausrüstungsteil, wie Armaturentafel, Armlehne, Haltegriff oder dergleichen, das aus einer rotierten Haut (5) mit einer Hinterschäumung oder Ausschäumung aus Kunststoffschaum (17) sowie mit einer darin ggf. eingelagerten Verstärkungseinlage (16) gebildet ist und das zumindest von einer zum Durchführen eines Befestigungselements bestimmten Montageöffnung (3) durchsetzt ist, die durch ein Abdeckelement (4) verschließbar ist, dadurch gekennzeichnet, daß das Abdeckelement (4) ein aus einer rotierten Haut gebildeter Formkörper ist, der aus dem Material der rotierten Haut (5) des Ausrüstungsteils besteht und einstückig an der rotierten Haut (5) des Ausrüstungsteils als abtrennbarer Bestandteil angeformt ist.

## Claims

1. Vehicle component, like a dashboard, an armrest, a handle or the like, which comprises a rotated film (5) with a back-foaming or foaming of foamed plastic material (17) and a reinforcing insert (16) if necessary supported inside said foaming, and a mounting opening (3) for the insertion of a fixing element, which opening passes through the component, wherein the opening is closeable by a covering element (4), characterized in that the covering element (4) is a body formed by a rotated film (5), which is made of the material of the rotated film (5) of the vehicle component and which is integrally moulded on the rotated film (5) of the component as a detachable component.

## Revendications

1. Partie d'équipement pour véhicules, telle que tableau de bord, accoudoir, poignée de prise et similaire, laquelle se compose d'un revêtement (5) obtenu par un procédé de rotation et d'une mousse (17) de matière synthétique expansée, et comporte également une pièce insérée de renforcement (16) éventuellement incorporée dans cette mousse, ladite partie étant traversée au moins par une ouverture de montage (3) destinée au passage d'un élément de fixation et pouvant être fermée par un élément de couverture (4), caractérisée en ce que l'élément de couverture (4) est un corps conformé se composant d'un revêtement obtenu dans le procédé de rotation, ce corps étant de la même matière que le revêtement (5) obtenu dans le procédé de rotation de la partie d'équipement et étant prévu d'un seul tenant, en tant qu'élément composant séparable, sur le revêtement (5) obtenu par le procédé de rotation de la partie d'équipement.
